# EUROPÄISCHE PATENTSCHRIFT

(11) **EP 1 495 961 B1**
(45) Veröffentlichungstag und Bekanntmachung des Hinweises auf die Patenterteilung: **13.02.2008**
(21) Anmeldenummer: 04015905.5
(22) Anmeldetag: 06.07.2004
(51) Int. Cl.: B64C 25/22

(54) **Luftfahrzeug-Fahrwerksbetätigung**
Retractable undercarriage actuation system
Système d'actionnement d'un train d'atterrissage escamotable

(30) Priorität: 08.07.2003 DE 10330805
(43) Veröffentlichungstag der Anmeldung: 12.01.2005
(73) Patentinhaber: Liebherr-Aerospace Lindenberg GmbH, 88161 Lindenberg/Allgäu (DE)
(72) Erfinder: Seung, Tähun Dipl. Ing., 88175 Scheidegg (DE)
(74) Vertreter: Thoma, Michael

(56) Entgegenhaltungen:
- EP-A- 0 614 804
- FR-A- 2 529 859
- GB-A- 653 132
- GB-A- 973 364
- US-A- 5 284 083

## Beschreibung

Die vorliegende Erfindung betrifft eine Luftfahrzeug-Fahrwerksbetätigung mit einer Türklappenstellvorrichtung zum Öffnen und Schließen einer Fahrwerkstür sowie einer Fahrwerksstellvorrichtung zum Ein- und Ausfahren des Fahrwerks, wobei die Fahrwerksstellvorrichtung und die Türklappenstellvorrichtung elektrohydraulisch ausgebildet sind und einen elektrischen Stellantriebsmotor aufweisen, der eine Hydraulikpumpe antreibt, durch die Stellzylinder der Fahrwerksstellvorrichtung und der Türklappenstellvorrichtung betätigbar sind.

Fahrwerksbetätigungen bei Flugzeugen arbeiten üblicherweise hydraulisch und werden von einer zentralen Hydraulikversorgung gespeist. Aus Sicherheitsgründen haben Flugzeuge dabei regelmäßig zwei oder drei zentrale Hydraulikversorgungen, mit denen die Fahrwerksbetätigung verbunden werden kann. Diese zentrale Hydraulikversorgung wird von den Triebwerken her permanent angetrieben, um die diversen Systeme eines Flugzeugs zu speisen. In Bezug auf die Fahrwerksbetätigung ist dies relativ uneffizient, da die Hydraulikversorgung permanent den Druck auch für die Fahrwerksbetätigung bereitstellt, obwohl diese in der Regel nur zweimal während eines Flugzyklusses in Betrieb gesetzt wird, nämlich vor der Landung und nach dem Start. Ein weiterer Nachteil herkömmlicher Fahrwerksbetätigungen ist die Vielzahl der verwendeten Ventile, über die das von der zentralen Hydraulikversorgung bereitgestellte Druckfluid auf die verschiedenen Aktuatoren der Fahrwerksbetätigung gegeben wird. Die Anzahl der möglichen Fehlerquellen bzw. Ausfallquellen ist entsprechend hoch.

Eine Luftfahrzeug-Fahrwerksbetätigung gemäß dem Oberbegriff des Patentanspruches 1 zeigt die GB 973,364, die eine elektrohydraulische Fahrwerksbetätigung mit einem elektrischen Stellmotor vorschlägt, der eine Hydraulikpumpe antreibt.

Weiterhin beschreibt es die EP 0 614 804 A1, jedem einzelnen Fahrwerksbein eines Flugzeugfahrwerks individuelle elektrohydraulische Versorgungen zuzuordnen. Ferner ist es aus der GB 557, 525 bekannt, Flugzeugaktoren, wie beispielsweise den eines Fahrwerks, durch dezentrale Pumpen-/Elektromotoreneinheiten zu betätigen, um lange Hydraulikleitungen zu beseitigen. Dabei wird vorgeschlagen, den die jeweilige Pumpe antreibenden Elektromotor in seiner Drehrichtung umzuschalten, so dass die Pumpe in umgekehrten Richtungen fördern und damit den Hydraulikzylinder ein- und ausfahren kann.

Der vorliegenden Erfindung liegt die Aufgabe zugrunde, eine verbesserte Luftfahrzeug-Fahrwerksbetätigung der eingangs genannten Art zu schaffen, die Nachteile des Standes der Technik vermeidet und letzteren in vorteilhafter Weise weiterbildet. Vorzugsweise soll eine einfache, energieeffiziente Fahrwerksbetätigung geschaffen werden, deren Störanfälligkeit gering ist und die eine präzise Bewegung der Fahrwerkskomponenten erlaubt.

Erfindungsgemäß wird diese Aufgabe durch eine Luftfahrzeug-Fahrwerksbetätigung gemäß Patentanspruch 1 gelöst. Bevorzugte Ausgestaltungen der Erfindung sind Gegenstand der Unteransprüche.

Erfindungsgemäß wird die Fahrwerksbetätigung durch direktes Steuern des elektrischen Stellantriebsmotors und der davon angetriebenen Hydraulikpumpe gesteuert. Die Drehzahl des Stellantriebsmotors kann gesteuert werden, um den Stellweg der jeweiligen Stellvorrichtung festzulegen. Dabei kann beispielsweise eine Kolbenpumpe Verwendung finden, so dass eine vorgegebene Drehzahl einer bestimmten Hydraulikfluidfördermenge entspricht, die wiederum den Stellweg des entsprechenden Aktors bestimmt. Über die Steuerung der Laufrichtung des Stellantriebsmotors bzw. der davon angetriebenen Hydraulikpumpe kann die Richtung der Stellbewegung des jeweiligen Aktors gesteuert werden. Dabei sind die Anschlußleitungen der Fahrwerksstellvorrichtung und der Türklappenstellvorrichtung an einem gemeinsamen Schaltventil zusammengefaßt, das eingangsseitig mit der Hydraulikversorgung verbindbar ist, in einer ersten Stellung die Anschlußleitungen der Fahrwerksstellvorrichtung mit der Hydraulikversorgung verbindet und gleichzeitig die Anschlußleitungen der Türklappenstellvorrichtung von der Hydraulikversorgung unterbricht, sowie in einer zweiten Stellung die Anschlußleitungen der Fahrwerksstellvorrichtung von der Hydraulikversorgung unterbricht und die Anschlußleitungen der Türklappenstellvorrichtung mit der Hydraulikversorgung verbindet. Je nach Stellung dieses Schaltventils kann also entweder die Fahrwerksstellvorrichtung oder die Türklappenstellvorrichtung betätigt werden, jedoch nicht beide zusammen gleichzeitig.

Die elektrische Betätigung des Fahrwerks erlaubt dabei einen energieeffizienteren Betrieb, da der Stellmotor nur dann betätigt wird, wenn die Fahrwerksbetätigung benötigt wird. Im restlichen Betrieb des Flugzeugs, sprich während des Fluges, kann der Stellantriebsmotor außer Betrieb gesetzt sein. Zudem vereinfacht sich die Steuerung der Fahrwerksbetätigung, da der elektrische Stellantriebsmotor einfach elektrisch steuerbar ist. Vorzugsweise ist nicht nur die Fahrwerksstellvorrichtung, sondern auch die Türklappenstellvorrichtung und ggf. weitere vorgesehene Stellvorrichtungen wie die Fahrwerkslenkvorrichtung für das Bugfahrwerk, mittels eines elektrischen Stellantriebsmotors betätigbar.

In Weiterbildung der Erfindung sind nicht nur die Fahrwerksstellvorrichtung und die Türklappenstellvorrichtung, sondern auch weitere Stellvorrichtungen wie die Fahrwerkslenkvorrichtung elektrohydraulisch ausgebildet. Der elektrische Stellantriebsmotor treibt dabei eine Hydraulikpumpe an, durch die die Stellzylinder der Fahrwerksstellvorrichtung, der Türklappenstellvorrichtung und der Fahrwerkslenkvorrichtung betätigbar sind. Vorteilhafterweise sind also die diversen Stellvorrichtungen der Fahrwerksbetätigung von einem gemeinsamen elektrischen Stellantriebsmotor betätigbar. Aus Redundanzgründen kann ggf. ein zweiter elektrischer Stellantriebsmotor vorgesehen sein, es benötigt jedoch nicht jede Stellvorrichtung ihren eigenen elektrischen Stellantriebsmotor.

Grundsätzlich könnte auch vorgesehen sein, dass die Antriebsbewegung des elektrischen Stellantriebsmotors in anderer Weise, insbesondere mechanisch, über ein Getriebe auf die Stellvorrichtungen übertragen wird. Die Umwandlung der Antriebsbewegung des elektrischen Stellantriebsmotors in hydraulische Energie besitzt jedoch Vorteile hinsichtlich eines einfachen Aufbaus. Zudem können an sich bewährte Komponenten für die Stellvorrichtungen verwendet werden.

In Weiterbildung der Erfindung ist der elektrische Stellantriebsmotor ausschließlich zur Fahrwerksbetätigung vorgesehen. Er wird also nicht zur Erzeugung weiterer Systemenergie, die andere Flugzeugkomponenten antreibt, verwendet. Insbesondere wird keine hydraulische Energie von der Hydraulikpumpe, die von dem elektrischen Stellantriebsmotor angetrieben wird, abgezapft, um weitere Flugzeugkomponenten zu betätigen. Durch die Verwendung eines eigenen Stellantriebs für die Fahrwerksbetätigung kann dieser speziell für die Fahrwerksbetätigung ausgelegt werden und während der überwiegenden Zeit eines Flugzyklusses außer Betrieb gesetzt werden, da die Fahrwerksbetätigung nicht benötigt wird.

In Weiterbildung der Erfindung besitzen das Bugfahrwerk und das Hauptfahrwerk separate elektrische Stellmotoren und separate, von den jeweiligen Stellmotoren angetriebene Hydraulikpumpen. Das Bugfahrwerk und das Hauptfahrwerk sind also jeweils autark angetrieben. Dies besitzt den großen Vorteil, dass keine langen Hydraulikleitungen in dem Luftfahrzeug verlegt werden müssen. Die Hydraulikdruckquelle wird vor Ort plaziert. Dies spart zum einen das Gewicht der langen Hydraulikleitungen. Zum anderen treten keine Leitungsverluste auf, so dass die Stellmotoren und Pumpen leichter dimensioniert werden können. Für das rechte und linke Hauptfahrwerk kann ein gemeinsamer elektrischer Stellantrieb sowie eine davon angetriebene Hydraulikpumpe vorgesehen sein. Vorzugsweise kann auch vorgesehen sein, dass das rechte Hauptfahrwerk und das linke Hauptfahrwerk separate elektrische Stellantriebe und zugeordnete Hydraulikpumpen haben.

Um einen besonders energieeffizienten Betrieb zu erreichen, werden die diversen Stellvorrichtungen der Fahrwerksbetätigung niemals gleichzeitig, sondern stets hintereinander betätigt. Dies besitzt den Vorteil, dass die Hydraulikpumpe und der diese antreibende Motor kleiner und damit leichter ausgebildet werden können. Sie brauchen nur für die Betätigung der am meisten Energie benötigenden Stellvorrichtung ausgelegt werden, nicht jedoch für die Summe des Energiebedarfs mehrerer Stellvorrichtungen. Dies spart Gewicht. In vorrichtungstechnischer Hinsicht wird die Nacheinanderbetätigung vorzugsweise dadurch erreicht, dass die Türklappen-, Fahrwerks- und ggf. Fahrwerkslenkstellvorrichtung über eine Ventilanordnung mit derselben Hydraulikversorgungsquelle verbindbar sind, wobei die Ventilanordnung derart ausgebildet ist, dass immer nur maximal eine Stellvorrichtung mit der Hydraulikversorgungsquelle verbindbar ist. Als Hydraulikversorgungsquelle kann grundsätzlich die zentrale Hydraulikversorgung eines Flugzeuges verwendet werden. Vorzugsweise ist es jedoch eine lokale Hydraulikversorgung der zuvor beschriebenen Art mit einem elektrischen Motor und einer davon angetriebenen Hydraulikpumpe, die speziell für die Fahrwerksbetätigung vorgesehen sind. Die Ventilanordnung, die die gleichzeitige Betätigung der Stellvorrichtungen verhindert, besteht vorzugsweise aus in Serie geschalteten Schaltventilen, die ausgangsseitig immer nur einen Ausgangskanal bzw. ein Ausgangskanalpaar bestehend aus Hin- und Rückführung öffnen. Die Schaltventile erlauben es, den eingangsseitig anliegenden Hydraulikdruck zu verschiedenen Stellvorrichtungen zu verzweigen. Da auf der Ausgangsseite der Schaltventile jedoch nur jeweils eine Verzweigung offen ist, werden die jeweils anderen Verzweigungen und die daran angeschlossenen Stellvorrichtungen abgesperrt.

In Weiterbildung der Erfindung kann das Schaltventil eine dritte Stellung aufweisen, in der die Anschlussleitungen sowohl der Fahrwerksstellvorrichtung als auch der Türklappenstellvorrichtung von der Hydraulikversorgung abgetrennt sind und die eingangsseitig anliegenden Leitungen der Hydraulikversorgung kurzgeschlossen, vorzugsweise über eine Heizdrossel geführt sind. Hierdurch kann Hydraulikfluid durch die Hydraulikversorgungsleitungen zirkuliert werden, um beispielsweise dann, wenn die Temperatur des Hydraulikfluids zu stark abfällt, das Hydraulikfluid umzuwälzen und dabei aufzuheizen.

In Weiterbildung der Erfindung ist ein zweites Schaltventil stromauf des vorgenannten ersten Schaltventils, d.h. näher bei der Hydraulikversorgung, angeordnet, an dem die Anschlussleitungen der Fahrwerkslenkvorrichtung und die zu dem ersten Schaltventil führenden Hydraulikversorgungsleitungen an der Ausgangsseite des Schaltventils zusammengefasst sind. Eingangsseitig ist das zweite Schaltventil mit der Hydraulikversorgung verbindbar. In einer ersten Stellung schaltet das Schaltventil die eingangsseitigen Hydraulikversorgungsleitungen zu dem ersten Schaltventil durch, so dass je nach dessen Stellung die Fahrwerksstellvorrichtung oder die Türklappenstellvorrichtung betätigbar ist. In einer zweiten Stellung des zweiten Schaltventils ist hingegen die Fahrwerkslenkvorrichtung durchgeschaltet, während das vorgenannte erste Schaltventil mit den daran hängenden Fahrwerks- und Türklappenstellvorrichtungen von der Hydraulikversorgung abgetrennt sind. Vorteilhafterweise ist dabei vorgesehen, dass die erste Stellung des zweiten Schaltventils dessen Ausgangsstellung ist. Hierdurch ist sichergestellt, dass bei einem Ausfall des Schaltventils die Türklappen geöffnet und das Fahrwerk ausgefahren werden kann. Auf das Lenken des Fahrwerks kann ggf. eher verzichtet werden als auf das Ausfahren.

Das erste Schaltventil kann als 10/3-Solenoidventil ausgebildet sein, während das zweite Schaltventil ein 8/2-Solenoidventil sein kann.

Um im Notfall, d.h. bei Ausfall der Hydraulikversorgung, dennoch ein Ausfahren des Fahrwerks zu ermöglichen, kann ein drittes Schaltventil vorgesehen sein, durch das die Fahrwerksstellvorrichtung und die Türklappenstellvorrichtung unter Umgehung der sonstigen Schaltventile direkt miteinander verbindbar sind, wobei in einer Ausgangsstellung des dritten Schaltventils die Anschlussleitungen der Fahrwerksstellvorrichtung und der Türklappenstellvorrichtung einfach zu den Hydraulikversorgungsleitungen durchgeschaltet sind, die zu dem vorgenannten ersten Schaltventil führen. In dieser Ausgangsstellung können die Fahrwerks- und Türklappenstellvorrichtungen also in der zuvor beschriebenen Weise von der Hydraulikversorgung her betätigt werden. Im Notfall jedoch kann das dritte Schaltventil umgeschaltet werden in eine Notfallstellung, in der die Ausgangsleitungen der Fahrwerksstellvorrichtung und der Türklappenstellvorrichtung mit der Eingangsleitung der Türklappenstellvorrichtung verbunden sind, während die Eingangsleitung der Fahrwerksstellvorrichtung mit dem Systemtank verbunden ist. In dieser Stellung kann das Fahrwerk durch die Schwerkraft ausfahren. Das über die Ausgangsleitung der Fahrwerksstellvorrichtung herausgedrückte Hydraulikfluid wird dabei in die Türklappenstellvorrichtung gedrückt, so dass die Türklappen geöffnet werden. Das hierdurch auf der gegenüberliegenden Seite aus dem Stellzylinder der Türklappenstellvorrichtung herausgedrückte Hydraulikfluid wird im Kreisschluss in die andere Kammer des Stellzylinders der Türklappenstellvorrichtung zurückgeführt, so dass die Türklappen möglichst schnell öffnen. Um zu verhindern, dass das Fahrwerk nicht gänzlich ausfahren kann, weil das Fluid aus dem Stellzylinder der Fahrwerksstellvorrichtung nicht gänzlich in den Stellzylinder der Türklappenstellvorrichtung geführt werden kann, ist die Ausgangsleitung der Fahrwerksstellvorrichtung zusätzlich über eine Drossel mit dem Systemtank verbunden, so dass dann ggf. Hydraulikfluid auch in den Tank zurückfließen kann.

Durch die geringe Anzahl der notwendigen Solenoidventile ist die Ventilanordnung wenig störanfällig. Die Bugfahrwerksbetätigung kann mit nur drei Solenoidventilen auskommen. Das Hauptfahrwerk kann sogar mit nur zwei Solenoidschaltventilen auskommen.

Die vorliegende Erfindung wird nachfolgend anhand eines bevorzugten Ausführungsbeispiels und zugehöriger Zeichnungen näher erläutert. In den Zeichnungen zeigen:
- Fig. 1: eine schematische Darstellung einer Bugfahrwerksbetätigung eines Flugzeugs nach einer bevorzugten Ausführungsform der vorliegenden Erfindung in einer schematischen Darstellung, wobei die Ventile in einer Schaltstellung gezeigt sind, in der die Fahrwerkstürklappen betätigbar sind,
- Fig. 2: die Bugfahrwerksbetätigung aus Fig. 1, wobei die Ventile in einer Schaltstellung gezeigt sind, in der das Fahrwerk ein -und ausfahrbar ist,
- Fig. 3: die Bugfahrwerksbetätigung aus den vorhergehenden Figuren, wobei die Ventile in einer Schaltstellung gezeigt sind, in der die Fahrwerkslenkung betätigbar ist,
- Fig. 4: die Bugfahrwerksbetätigung aus den vorhergehenden Figuren, wobei die Ventile in einer Schaltstellung gezeigt sind, in der sämtliche Stellvorrichtungen abgesperrt sind und die Hydraulikflüssigkeit zum Zwecke des Heizens durch eine Heizdrossel zirkulierbar ist,
- Fig. 5: die Bugfahrwerksbetätigung aus den vorhergehenden Figuren, wobei die Ventile in einer Schaltstellung gezeigt sind, in der im Notfall ohne Fremdenergiezufuhr das Fahrwerk ausfahrbar und die Fahrwerkstürklappen zu öffnen sind, und
- Fig. 6: eine Hauptfahrwerksbetätigung nach einer bevorzugten Ausführung der Erfindung, wobei die Ventile einer Stellung gezeigt sind, in der die Fahrwerkstürklappen geöffnet bzw. geschlossen werden können.

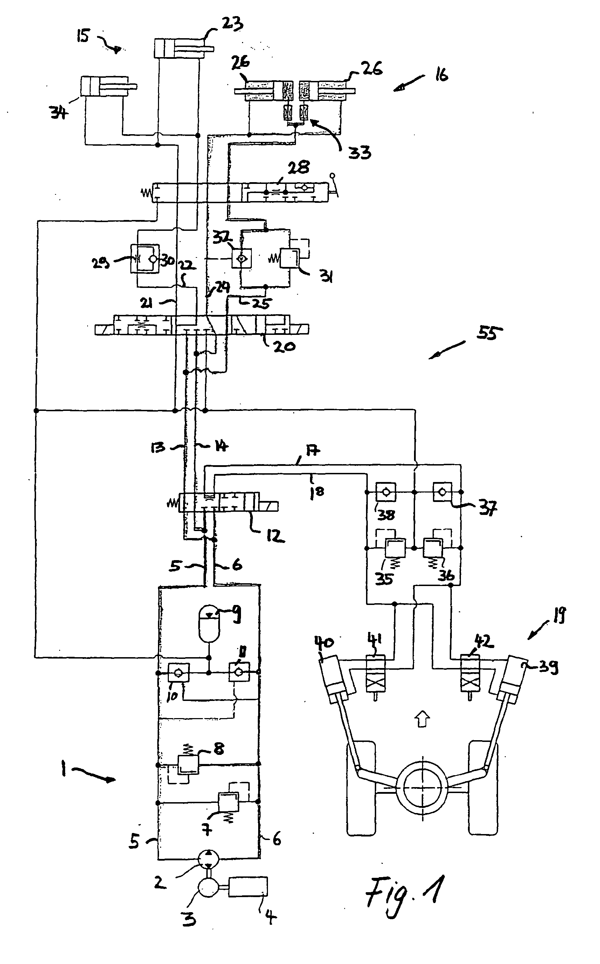

Die in den Figuren 1 bis 5 gezeigte Bugfahrwerksbetätigung umfasst eine eigene, lokale Hydraulikversorgung 1, die eine Hydraulikpumpe 2 sowie einen diese antreibenden elektrischen Motor 3, der von einer elektronischen Steuerungsvorrichtung 4 ansteuerbar ist, aufweist. Die Hydraulikversorgung 1 wird im geschlossenen Kreislauf betrieben. Die von der Hydraulikpumpe 2 abgehenden Hydraulikversorgungsleitungen 5 und 6 bilden je nach Drehrichtung der Hydraulikpumpe 2 eine Zufuhr- und Rückführleitung. Die Hydraulikversorgungsleitungen 5 und 6 sind zunächst mit Überdruckventilen 7 und 8 miteinander verbunden, um bei zu großem Druck in der Zufuhrleitung ein Überströmen auf die Rückführseite zu erlauben. Ein Tank 9 ist über druckgesteuerte Absperrventile 10 und 11, die als sogenannte Pilot Check Valves ausgebildet sind, mit den Hydraulikversorgungsleitungen 5 und 6 verbindbar.

Die Hydraulikversorgungsleitungen 5 und 6 führen zunächst zu einem Schaltventil 12, das als 8/2-Solenoidventil ausgebildet ist. Ausgangsseitig liegen an dem Schaltventil 12 einerseits Hydraulikversorgungsleitungen 13 und 14, die zu der Fahrwerksstellvorrichtung 15 zum Ein- und Ausfahren des Fahrwerks und zur Türklappenstellvorrichtung 16 zum Öffnen und Schließen der Fahrwerkstürklappen führen, und andererseits Hydraulikversorgungsleitungen 17 und 18 an, die eine Fahrwerkslenkvorrichtung 19 speisen.

Die Hydraulikversorgungsleitungen 13 und 14 für die Fahrwerks- und Türklappenstellvorrichtungen 15 und 16 führt zu einem weiteren Schaltventil 20, das als 10/3-Solenoidventil ausgebildet ist und den in den Hydraulikversorgungsleitungen 13 und 14 bereitstehenden Hydraulikdruck wahlweise entweder auf die Fahrwerksstellvorrichtung 15 oder die Türklappenstellvorrichtung 16 gibt. Ausgangsseitig liegen an dem Schaltventil 20 einerseits Hydraulikversorgungsleitungen 21, 22 an, die zu dem Stellzylinder 23 der Fahrwerksstellvorrichtung 15 führen, und andererseits Hydraulikversorgungsleitungen 24 und 25 an, die zu den Stellzylindern 26 der Türklappenstellvorrichtung 16 führen. Die von dem Schaltventil 20 abführenden Hydraulikversorgungsleitungen 21, 22 und 24, 25 sind über ein Notfallschaltventil 28 geführt, mit Hilfe dessen im Notfall ohne Hydraulikenergie von der Hydraulikversorgung 1 das Fahrwerk ausgefahren und die Türklappen dabei geöffnet werden können, wie noch näher erläutert wird. Wie Figur 1 zeigt, ist in die Hydraulikversorgungsleitung 22, die beim Ausfahren des Fahrwerks das Hydraulikfluid aus dem entsprechenden Stellzylinder 23 rückführt und beim Einfahren des Fahrwerks unter Druck steht, eine Drossel 29 geschaltet, die über ein Rückschlagventil 30 überbrückbar ist, das beim Einfahren des Fahrwerks öffnet. In die Hydraulikversorgungsleitung 25, die beim Öffnen der Türklappen unter Druck steht und beim Schließen der Türklappen der Rückführung des Hydraulikfluids aus dem Stellzylinder 26 dient, ist einerseits ein Überdruckventil 31 geschaltet und dazu parallel ein steuerbares Absperrventil 32 geschaltet, das vom in der Hydraulikversorgungsleitung 24 anliegenden Druck gesteuert ist.

In der in Figur 1 gezeigten Schaltstellung der Ventile kann die Türklappenstellvorrichtung 16 betätigt werden. Wird über die Steuervorrichtung 4 der Motor 3 in der richtigen Drehrichtung betätigt, wird durch die Hydraulikpumpe 2 Druck in der Hydraulikversorgungsleitung 6 erzeugt. Dieser wird über das Schaltventil 12, das in seiner federbelasteten Ausgangsstellung ist, durchgeschaltet auf die Hydraulikversorgungsleitung 13, die über das Schaltventil 20 wiederum durchgeschaltet ist auf die Hydraulikversorgungsleitung 25. Diese gibt über den Mengenteiler 33 das Hydraulikfluid in die Stellzylinder 26, so dass diese die Türklappen gleichermaßen öffnen können.

Bei der Betätigung der Türklappenstellvorrichtung 16 ist einerseits durch das Schaltventil 12 die Fahrwerkslenkvorrichtung 19 abgesperrt. Andererseits ist durch das Schaltventil 20 die Fahrwerksstellvorrichtung 15 abgesperrt. Mit dieser Konstellation ist also nur die Betätigung der Türklappen möglich.

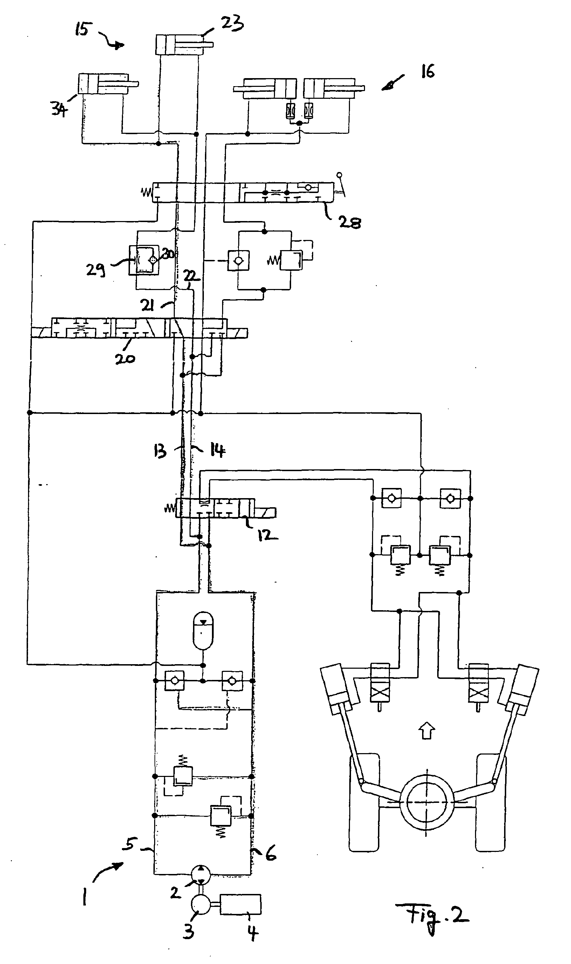

Soll nach erfolgreichem Öffnen der Türklappen das Fahrwerk ausgefahren werden, werden die Schaltventile in die in Figur 2 gezeichnete Stellung gefahren. Das Schaltventil 20 schaltet in die gemäß Figur 2 linke Stellung, während das vorgeschaltete Schaltventil 12 in der Ausgangsstellung verharrt. Hierdurch wird der in den Hydraulikversorgungsleitungen 13 oder 14 anliegende Hydraulikdruck über das Schaltventil 20 in die Hydraulikversorgungsleitungen 21 bzw. 22 geschaltet. Zum Ausfahren wird die Hydraulikpumpe 2 so betrieben, dass die Hydraulikversorgungsleitung 21 unter Druck steht. Der in der Hydraulikversorgungsleitung 21 anliegende Druck schiebt einerseits den Stellzylinder 23 in seine ausfahrende Stellung. Zum anderen wird ein Ausfahrverriegelungszylinder 34 mit Druck beaufschlagt. Das über die Hydraulikversorgungsleitung 22 rückgeführte Fluid wird über die Drossel 29 rückgeführt. Zum Einfahren des Fahrwerks wird die Drehrichtung des Motors 3 umgedreht, so dass die Hydraulikversorgungsleitung 22 unter Druck steht. Das Fluid kann unter Umgehung der Drossel 29 einerseits den Stellzylinder 23 einfahren und andererseits den Verriegelungszylinder 34 in seine entriegelnde Stellung bewegen.

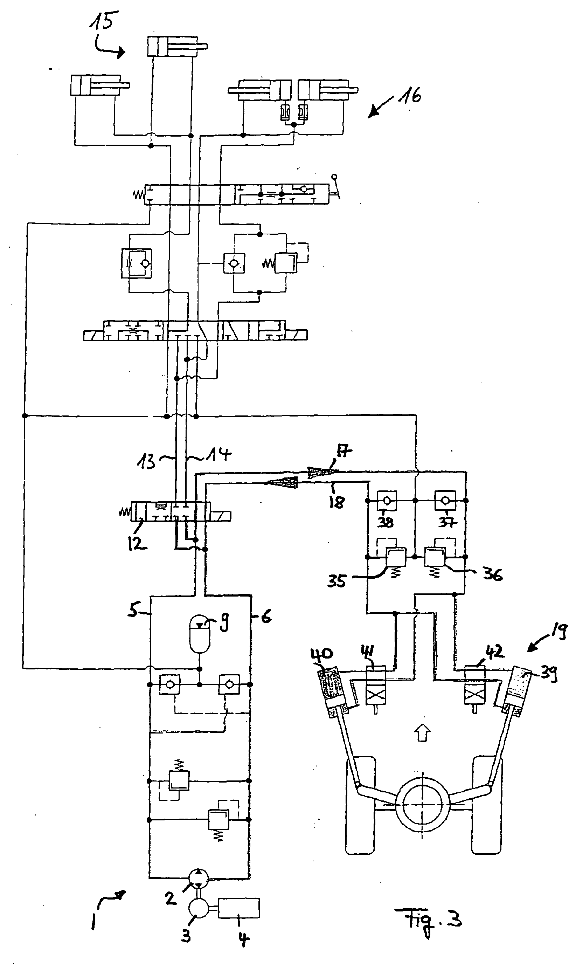

Um nach dem Ausfahren des Fahrwerks selbiges lenken zu können, wird, wie Figur 3 zeigt, das Schaltventil 12 in seine zweite Schaltstellung bewegt, und zwar durch den Solenoid entgegen der Federvorspannung. In dieser Schaltstellung sind die Hydraulikversorgungsleitungen 13 und 14 und damit die Fahrwerksstellvorrichtung 15 und die Türklappenstellvorrichtung 16 von der Hydraulikversorgung 1 abgesperrt. Die Hydraulikversorgungsleitungen 17 und 18 sind hingegen zur Hydraulikdruckquelle durchgeschaltet, die zu der Fahrwerkslenkvorrichtung 19 führen. Wie Figur 3 zeigt, sind die Hydraulikversorgungsleitungen 17 und 18 einerseits durch Überdruckventile mit dem Tank 9 verbindbar. Andererseits sind sie über Rückschlagventile 37, 38 mit dem Tank 9 verbindbar, so dass ggf. aus dem Tank 9 Hydraulikfluid nachgezogen werden kann, um bei Unterdruck Blasenbildung (Kavitation) in den Leitungen zu vermeiden. Über Stellzylinder 39, 40 kann das Bugfahrwerk von der Hydraulikversorgung 1 her durch entsprechende Steuerung des Motors 3 gesteuert werden. Über die Umkehrschaltventile 41, 42 kann dabei die Lenkung über den Totpunkt der Lenker hinaus betätigt werden.

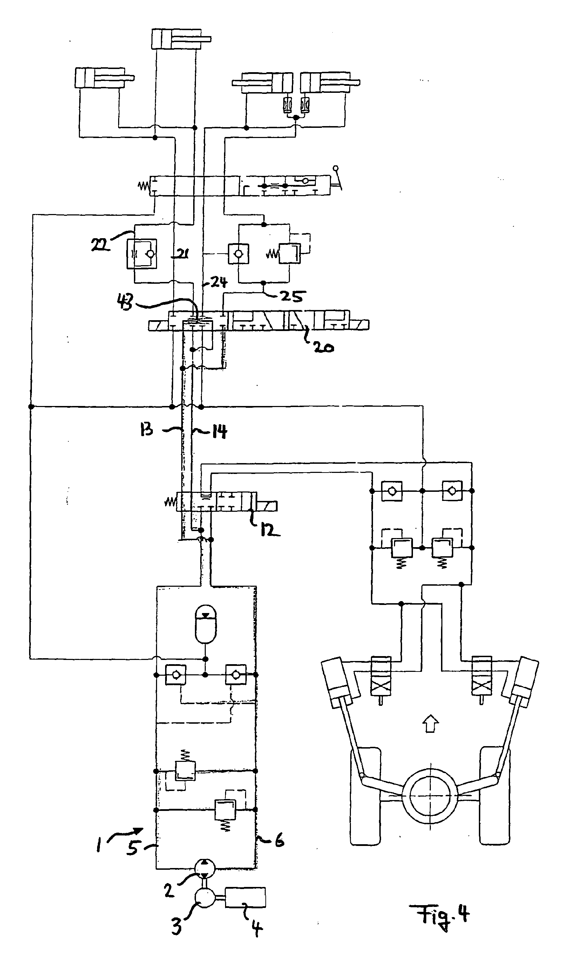

Soll keinerlei Fahrwerksbetätigung erfolgen, werden die Schaltventile in die in Figur 4 gezeichnete Stellung gebracht. Das Schaltventil 12 ist in seiner Ausgangsstellung, in der die Hydraulikversorgungsleitungen 5 und 6 auf die Hydraulikversorgungsleitungen 13 und 14 durchgeschaltet sind. Die Hydraulikversorgungsleitungen 21, 22 und 24, 25 für die Fahrwerks- und Türklappenstellvorrichtungen 15 und 16 sind jedoch durch das Schaltventil 20 abgesperrt. Die Hydraulikversorgungsleitungen 13 und 14 sind in dem Schaltventil 20 kurzgeschlossen, und zwar über eine Heizdrossel 43. Sinkt die Temperatur des Hydraulikfluids unter einen vorgegebenen Schwellwert, kann der Motor 3 und damit die Pumpe 2 in Gang gesetzt werden. Das Hydraulikfluid zirkuliert über den Kurzschluss im Schaltventil 20 durch die Heizdrossel 43, wodurch eine Temperaturerhöhung erreicht werden kann. Eine versehentliche Betätigung der verschiedenen Stellvorrichtungen ist während dieser Zeit nicht möglich.

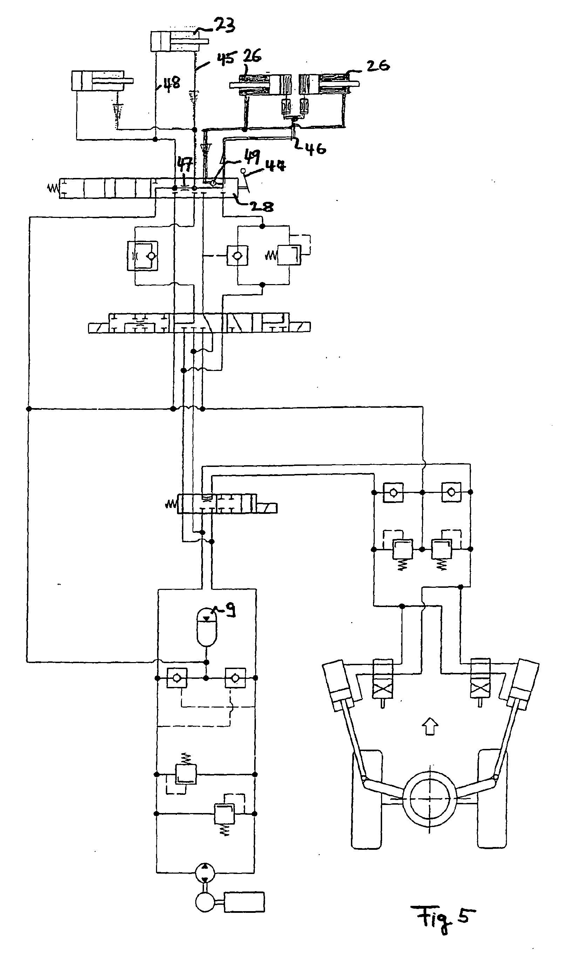

Versagt eine der Hydraulikversorgungskomponenten, beispielsweise die Hydraulikversorgung 1 insgesamt, dann kann das Notfallbetätigungsventil 28 aus seiner Ausgangsstellung heraus in seine zweite Schaltstellung gemäß Figur 5 gebracht werden. Das Notfallbetätigungsventil 28 ist als 10/2-Solenoidventil ausgebildet. Gegebenfalls kann eine Handbetätigung durch Cockpitbesatzung zugeschaltet sein, um nicht auf die elektrobetätigten Stellkräfte des Solenoids angewiesen zu sein. Figur 5 deutet einen Handstellhebel 44 an. In dieser Notfallstellung gemäß Figur 5 sind die Fahrwerksstellvorrichtung 15 und die Türklappenstellvorrichtung 16 direkt miteinander verbunden, und zwar unter Umgehung der restlichen Schaltventile. Die Hydraulikleitung 45, die mit der kolbenstangenseitigen Kammer des Stellzylinders 23 verbunden ist, wird über das Ventil 28 mit der Eingangsleitung 46 der Stellzylinder 26 der Türklappenstellvorrichtung 16 verbunden. Zudem ist die Hydraulikleitung 45 über eine Drossel 47 im Ventil 28 mit dem Tank 9 verbunden. Mit dem Tank 9 ist ebenfalls die Hydraulikleitung 48 verbunden, die mit der zweiten Kammer des Stellzylinders 23 verbunden ist. Bei den Stellzylindern 26 der Türklappenstellvorrichtung 16 ist die kolbenstangenseitige Stellzylinderkammer über das Rückschlagventil 49 mit der Eingangsleitung 46 kurzgeschlossen. Somit ergibt sich folgende Funktion: Durch die Schwerkraft wird das Fahrwerk nach unten gedrückt. Dementsprechend wird das in die Hydraulikleitung 45 gedrückte Hydraulikfluid über das Ventil 28 und die eingangsseitige Hydraulikleitung 46 in die Stellzylinder 26 gedrückt, wodurch die Fahrwerkstüren aufgedrückt werden. Dabei kann aus dem Tank 9 Hydraulikfluid nachströmen in die zweite Kammer des Stellzylinders 23. Um das Öffnen der Türklappen zu beschleunigen, wird das aus den Stellzylindern 26 herausgedrückte Hydraulikfluid nicht in den Tank rückgeführt, sondern im Kreislauf in die eingangsseitige Hydraulikleitung 46 rückgeführt. Nach dem vollständigen Öffnen der Fahrwerkstüren kann das überflüssige Hydraulikfluid über die Drossel 47 in den Tank 9 geleitet werden.

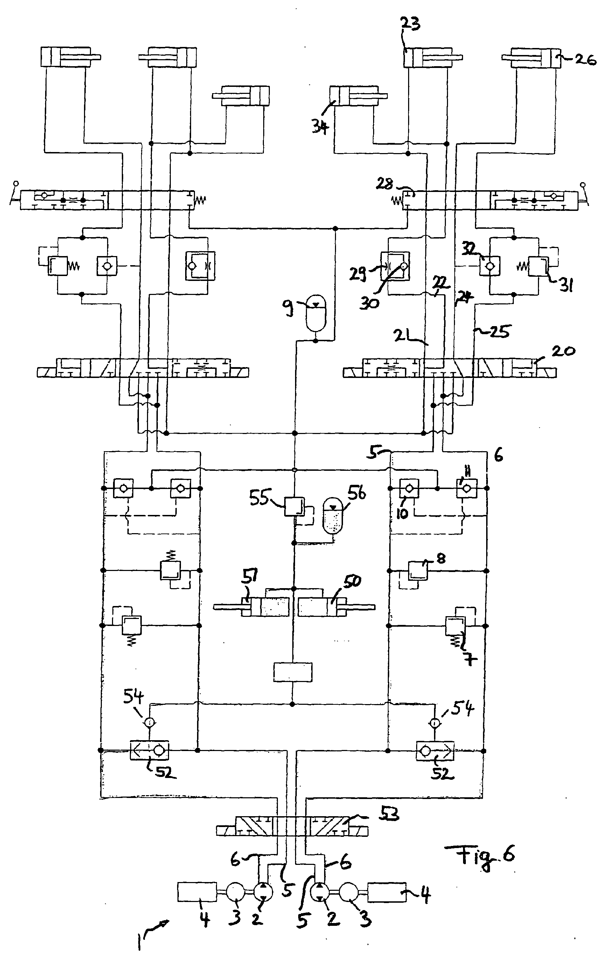

Die in Figur 6 gezeigte Hauptfahrwerkbetätigung zur Betätigung des rechten und linken Hauptfahrwerks ist in weiten Teilen identisch mit der zuvor beschriebenen Bugfahrwerkbetätigung ausgebildet, so dass für entsprechende Bauteile dieselben Bezugsziffern verwendet sind. Es fehlt lediglich die Fahrwerkslenkvorrichtung 19 und das zugehörige Schaltventil 12. Sollten die Hauptfahrwerke jeweils mit einem Pitch Trimmer vorgesehen sein, der über zwei Stellzylinder 50 und 51 ein sogenanntes Bogie-Fahrwerk in seine die Bodenfreiheit erhöhende Stellung drückt, können die Pitch Trimmer mit der gezeigten Schaltung ununterbrochen versorgt werden. Wie Figur 6 zeigt, sind die Stellzylinder 50 und 51 unabhängig von der Schaltstellung des Schaltventils 20 immer in ihre die Bodenfreiheit erhöhende Stellung vorgespannt. Sie sind über ein sogenanntes Shuttle-Ventil 52 immer mit der jeweils druckführenden Hydraulikversorgungsleitung 5 und 6 verbunden. Die Rückschlagventile 54 sorgen mit einem Überdruckventil 55 dafür, dass der eingespeiste Druck gehalten wird. Sollte der Druck über ein vordefiniertes Niveau hinaus steigen, wird sich das Überdruckventil öffnen und die überflüssige Hydraulikflüssigkeit in den Tank 9 speisen.

Wie Figur 6 zeigt, sind die Fahrwerksbetätigungen für das rechte und das linke Fahrwerk mit jeweils separaten Hydraulikversorgungen mit jeweils separaten Motoren 3 und separaten Hydraulikpumpen 2 ausgestattet. Über ein in die jeweiligen Hydraulikversorgungsleitungen 5 und 6 geschaltetes Umschaltventil 53, das als 8/3-Solenoidventil ausgebildet ist, kann dabei zur Erhöhung der Sicherheit die Hydraulikversorgung 1 des rechten Fahrwerks auch zur Betätigung des linken Fahrwerks und umgekehrt verwendet werden, um eine redundante Auslegung zu erreichen. Gegebenenfalls könnte nur eine gemeinsame Hydraulikversorgung 1 für beide Hauptfahrwerke vorgesehen sein. Im übrigen entspricht die Anordnung der Schaltventile 20 und der Notfallbetätigungsventile 28 der Anordnung beim Bugfahrwerk, das in Verbindungen mit Figuren 1 bis 5 ausführlich beschrieben wurde, so dass hierauf verwiesen wird.

## Patentansprüche

1. Luftfahrzeug-Fahrwerksbetätigung mit einer Türklappenstellvorrichtung (16) zum Öffnen und Schließen einer Fahrwerkstür sowie einer Fahrwerksstellvorrichtung (15) zum Ein- und Ausfahren des Fahrwerks, wobei die Fahrwerksstellvorrichtung (15) und die Türklappenstellvorrichtung (16) elektrohydraulisch ausgebildet sind und einen elektrischen Stellantriebsmotor (3) aufweisen, der eine Hydraulikpumpe (2) antreibt, durch die Stellzylinder (23, 26) der Fahrwerksstellvorrichtung (15) und der Türklappenstellvorrichtung (16) betätigbar sind, **dadurch gekennzeichnet, dass** eine Steuervorrichtung (4) vorgesehen ist, die den Stellweg der Fahrwerksstellvorrichtung (15) und der Türklappenstellvorrichtung (16) durch Steuerung der Drehzahl und der Laufrichtung des Stellantriebsmotors (3) und/oder der davon angetriebenen Hydraulikpumpe (2) steuert, wobei die Anschlußleitungen (21, 22; 24, 25) der Fahrwerksstellvorrichtung (15) und der Türklappenstellvorrichtung (16) an einem gemeinsamen Schaltventil (20) zusammengefaßt sind, das eingangsseitig mit der Hydraulikpumpe (2) verbindbar ist, in einer ersten Stellung die Anschlußleitungen (21, 22) der Fahrwerksstellvorrichtung (15) mit der Hydraulikversorgung (2) verbindet und gleichzeitig die Anschlußleitungen (24, 25) der Türklappenstellvorrichtung (16) von der Hydraulikpumpe (2) unterbricht, sowie in einer zweiten Stellung die Anschlußleitungen (24, 25) der Türklappenstellvorrichtung (16) mit der Hydraulikversorgung (2) verbindet und gleichzeitig die Anschlußleitungen (21, 22) der Fahrwerksstellvorrichtung (15) von der Hydraulikversorgung (2) unterbricht.

2. Luftfahrzeug-Fahrwerksbetätigung nach dem vorhergehenden Anspruch, wobei eine Fahrwerkslenkvorrichtung (19) elektrohydraulisch ausgebildet ist, wobei ein Stellzylinder (39, 40) der Fahrwerkslenkvorrichtung (19) durch die genannte Hydraulikpumpe (2) betätigbar ist, und wobei die Steuervorrichtung (4) die Betätigung der Fahrwerkslenkvorrichtung (19) durch Steuerung der Drehzahl und der Laufrichtung des Stellantriebsmotors (3) und/oder der davon angetriebenen Hydraulikpumpe (2) steuert.

3. Luftfahrzeug-Fahrwerksbetätigung nach einem der vorhergehenden Ansprüche, wobei der elektrische Stellantriebsmotor (3) ausschließlich zur Fahrwerksbetätigung vorgesehen ist.

4. Luftfahrzeug-Fahrwerksbetätigung nach einem der vorhergehenden Ansprüche, wobei Bugfahrwerk und Hauptfahrwerk separate elektrische Stellmotoren (3) und/oder separate Hydraulikpumpen (2) aufweisen.

5. Luftfahrzeug-Fahrwerksbetätigung nach Anspruch 2 oder einem der darauf rückbezogenen Ansprüche, wobei die Türklappen-, Fahrwerks- und Fahrwerkslenkstellvorrichtungen über eine Ventilanordnung (55) mit derselben Hydraulikversorgungsquelle (2) verbindbar sind, wobei die Ventilanordnung (55) derart ausgebildet ist, dass immer nur maximal eine Stellvorrichtung (15, 16, 19) mit der Hydraulikversorgungsquelle (2) verbindbar ist.

6. Luftfahrzeug-Fahrwerksbetätigung nach dem vorhergehenden Anspruch, wobei die Ventilanordnung (55) aus in Serie geschalteten Schaltventilen (12, 20) besteht, die ausgangsseitig immer nur einen Ausgangskanal bzw. ein Ausgangskanalpaar bestehend aus Hin- und Rückführleitung öffnen.

7. Luftfahrzeug-Fahrwerksbetätigung nach einem der vorhergehenden Ansprüche, wobei das Schaltventil (20), an dem die Anschlußleitungen (21, 22; 24, 25) der Fahrwerksstellvorrichtung (15) und der Türklappenstellvorrichtung (16) zusammengefasst sind, eine dritte Stellung aufweist, in der die Anschlussleitungen (21, 22; 24, 25) sowohl der Fahrwerksstellvorrichtung (15) als auch der Türklappenstellvorrichtung (16) von der Hydraulikpumpe (2) abgetrennt sind und die eingangsseitig anliegenden Leitungen (13, 14) der Hydraulikpumpe (2) kurzgeschlossen, vorzugsweise über eine Heizdrossel (43) geführt sind.

8. Luftfahrzeug-Fahrwerksbetätigung nach einem der vorhergehenden Ansprüche, wobei das Schaltventil (20) als 10/3-Solenoidventil ausgebildet ist.

9. Luftfahrzeug-Fahrwerksbetätigung nach Anspruch 2 oder einem der auf Anspruch 2 rückbezogenen weiteren Ansprüche, wobei die Anschlussleitungen (17, 18) der Fahrwerkslenkvorrichtung (19) und die Versorgungsleitungen (13, 14) für die Fahrwerksstellvorrichtung (15) und die Türklappenstellvorrichtung (16) an der Ausgangsseite eines Schaltventils (12) zusammengefasst sind, das eingangsseitig mit der Hydraulikpumpe (2) verbindbar ist, in einer ersten Stellung die Versorgungsleitungen (13, 14) für die Fahrwerksstellvorrichtung (15) und die Türklappenstellvorrichtung (16) mit der Hydraulikpumpe (2) verbindet und gleichzeitig die Anschlussleitungen (17, 18) der Fahrwerkslenkvorrichtung (19) von der Hydraulikpumpe abtrennt, und in einer zweiten Stellung die Versorgungsleitungen (13, 14) für die Fahrwerksstellvorrichtung (15) und die Türklappenstellvorrichtung (16) von der Hydraulikpumpe (2) abtrennt und gleichzeitig die Anschlussleitungen (17, 18) der Fahrwerkslenkvorrichtung (19) mit der Hydraulikpumpe (2) verbindet.

10. Luftfahrzeug-Fahrwerksbetätigung nach dem vorhergehenden Anspruch, wobei die erste Stellung die Ausgangsstellung des Schaltventils (12) ist.

11. Luftfahrzeug-Fahrwerksbetätigung nach einem der beiden vorhergehenden Ansprüche, wobei das Schaltventil (12) als 8/2-Solenoidventil vorgesehen ist.

12. Luftfahrzeug-Fahrwerksbetätigung nach einem der vorhergehenden Ansprüche, wobei die Fahrwerksstellvorrichtung (15) und die Türklappenstellvorrichtung (16) über ein Schaltventil (28) direkt miteinander verbindbar sind, das in einer Ausgangsstellung die Anschlussleitungen der Fahrwerksstellvorrichtung (15) und der Türklappenstellvorrichtung (16) mit Hydraulikversorgungsleitungen (21, 22; 24, 25) verbindet und in einer Notfallstellung die Ausgangsleitung (45) der Fahrwerksstellvorrichtung (15) und die Ausgangsleitung der Türklappenstellvorrichtung (16) mit der Eingangsleitung (46) der Türklappenstellvorrichtung (16) verbindet und die Eingangsleitung (48) der Fahrwerksstellvorrichtung (15) mit dem Systemstank (9) verbindet.

13. Luftfahrzeug-Fahrwerksbetätigung nach einem der vorhergehenden Ansprüche, wobei die Ventilanordnung (55) des Bugfahrwerks genau drei fremdenergiebetätigbare Schaltventile (12, 20, 28) und/oder die Ventilanordnung eines jeden Hauptfahrwerks genau zwei fremdenergiebetätigbare Schaltventile (20, 28) aufweist.

## Claims

1. Retractable undercarriage actuation system for an aircraft, with a door-flap actuating device (16) for opening and closing a retractable undercarriage door, and with a retractable undercarriage actuating device (15) for raising and lowering the retractable undercarriage, wherein the retractable undercarriage actuating device (15) and the door-flap actuating device (16) are of electrohydraulic design and have an electric servomotor (3) which drives a hydraulic pump (2) by means of which actuating cylinders (23, 26) of the retractable undercarriage actuating device (15) and of the door-flap actuating device (16) can be actuated, **characterized in that** a control device (4) is provided, the control device controlling the actuation of the retractable undercarriage actuating device (15) and of the door-flap actuating device (16) by controlling the speed and the direction of rotation of the servomotor (3) and/or of the hydraulic pump (2) driven thereby, the connecting lines (21, 22; 24, 25) of the retractable undercarriage actuating device (15) and of the door-flap actuating device (16) being combined at a common switching valve (20) which can be connected on the input side to the hydraulic pump (2), in a first position connects the connecting lines (21, 22) of the retractable undercarriage actuating device (15) to the hydraulic supply (2) and at the same time interrupts the connecting lines (24, 25) of the door-flap actuating device (16) from the hydraulic pump (2) and, in a second position, connects the connecting lines (24, 25) of the door-flap actuating device (16) to the hydraulic supply (2) and at the same time interrupts the connecting lines (21, 22) of the retractable undercarriage actuating device (15) from the hydraulic supply (2).

2. Retractable undercarriage actuation system for an aircraft according to the preceding claim, wherein a retractable undercarriage steering device (19) is of electrohydraulic design, wherein an actuating cylinder (39, 40) of the retractable undercarriage steering device (19) can be actuated by the hydraulic pump (2) mentioned, and wherein the control device (4) controls the actuation of the retractable undercarriage steering device (19) by controlling the speed and the direction of rotation of the servomotor (3) and/or of the hydraulic pump (2) driven thereby.

3. Retractable undercarriage actuation system for an aircraft according to one of the preceding claims, wherein the electric servomotor (3) is provided exclusively for the retractable undercarriage actuation system.

4. Retractable undercarriage actuation system for an aircraft according to one of the preceding claims, wherein front retractable undercarriage and main retractable undercarriage have separate electric servomotors (3) and/or separate hydraulic pumps (2).

5. Retractable undercarriage actuation system for an aircraft according to Claim 2 or one of the claims referring back thereto, wherein the door-flap, retractable undercarriage and retractable undercarriage steering actuating devices can be connected to the same hydraulic supply source (2) via a valve arrangement (55), and wherein the valve arrangement (55) is designed in such a manner that only at maximum one actuating device (15, 16, 19) can ever be connected to the hydraulic supply source (2).

6. Retractable undercarriage actuation system for an aircraft according to the preceding claim, wherein the valve arrangement (55) comprises switching valves (12, 20) which are connected in series and, on the output side, only ever open one output passage or one pair of output passages comprising a forward and return line.

7. Retractable undercarriage actuation system for an aircraft according to one of the preceding claims, wherein the switching valve (20) at which the connecting lines (21, 22; 24, 25) of the retractable undercarriage actuating device (15) and of the door-flap actuating device (16) are combined has a third position in which the connecting lines (21, 22; 24, 25) both of the retractable undercarriage actuating device (15) and of the door-flap actuating device (16) are disconnected from the hydraulic pump (2) and the lines (13, 14), which are present on the input side, of the hydraulic pump (2) are short-circuited, preferably routed via a filament choke (43).

8. Retractable undercarriage actuation system for an aircraft according to one of the preceding claims, wherein the switching valve (20) is designed as a 10/3 solenoid valve.

9. Retractable undercarriage actuation system for an aircraft according to Claim 2 or one of the further claims referring back to Claim 2, wherein the connecting lines (17, 18) of the retractable undercarriage steering device (19) and the supply lines (13, 14) for the retractable undercarriage actuating device (15) and the door-flap actuating device (16) are combined on the output side of a switching valve (12) which can be connected on the input side to the hydraulic pump (2), in a first position connects the supply lines (13, 14) for the retractable undercarriage actuating device (15) and the door-flap actuating device (16) to the hydraulic pump (2) and at the same time disconnects the connecting lines (17, 18) of the retractable undercarriage steering device (19) from the hydraulic pump, and, in a second position, disconnects the supply lines (13, 14) for the retractable undercarriage actuating device (15) and the door-flap actuating device (16) from the hydraulic pump (2) and at the same time connects the connecting lines (17, 18) of the retractable undercarriage steering device (19) to the hydraulic pump (2).

10. Retractable undercarriage actuation system for an aircraft according to the preceding claim, wherein the first position is the initial position of the switching valve (12).

11. Retractable undercarriage actuation system for an aircraft according to one of the two preceding claims, wherein the switching valve (12) is provided in the form of an 8/2 solenoid valve.

12. Retractable undercarriage actuation system for an aircraft according to one of the preceding claims, wherein the retractable undercarriage actuating device (15) and the door-flap actuating device (16) can be connected directly to each other via a switching valve (28) which, in an initial position, connects the connecting lines of the retractable undercarriage actuating device (15) and of the door-flap actuating device (16) to hydraulic supply lines (21, 22; 24, 25) and, in an emergency position, connects the output line (45) of the retractable undercarriage actuating device (15) and the output line of the door-flap actuating device (16) to the input line (46) of the door-flap actuating device (16) and connects the input line (48) of the retractable undercarriage actuating device (15) to the system tank (9).

13. Retractable undercarriage actuation system for an aircraft according to one of the preceding claims, wherein the valve arrangement (53) of the front retractable undercarriage has precisely three switching valves (12, 20, 28) which can be actuated by external power, and/or the valve arrangement of each main retractable undercarriage has precisely two switching valves (20, 28) which can be actuated by external power.

## Revendications

1. Système d'actionnement de train d'aéronef comprenant un dispositif de réglage de trappe de porte (16) pour l'ouverture et la fermeture d'une porte de train et d'un dispositif de réglage de train (15) pour l'entrée et la sortie du train d'atterrissage, le dispositif de réglage de train (15) et le dispositif de réglage de trappe de porte (16) étant réalisés de façon hydroélectrique et présentant un moteur électrique de mécanisme de commande (3), qui entraîne une pompe hydraulique (2), par laquelle des vérins de réglage (23, 26) du dispositif de réglage de train (15) et du dispositif de réglage de trappe de porte (16) peuvent être actionnés, **caractérisé en ce qu'**il est prévu un dispositif de commande (4) qui commande la course de réglage du dispositif de réglage de train (15) et du dispositif de réglage de trappe de porte (16) par la commande du régime et du sens de marche du moteur de mécanisme de commande (3) et/ou de la pompe hydraulique (2) entraînée par celui-ci, les conduites de raccordement (21, 22 ; 24, 25) du dispositif de réglage de train (15) et du dispositif de réglage de trappe de porte (16) étant regroupées sur une vanne de commutation (20) commune, laquelle peut être reliée côté entrée à la pompe hydraulique (2), relient dans une première position les conduites de raccordement (21, 22) du dispositif de réglage de train (15) à l'alimentation hydraulique (2) et interrompant en même temps les conduites de raccordement (24, 25) du dispositif de réglage de trappe de porte (16) par rapport à la pompe hydraulique (2), et dans une seconde position reliant les conduites de raccordement (24, 25) du dispositif de réglage de trappe de porte (16) à l'alimentation hydraulique (2) et dans le même temps interrompant les conduites de raccordement (21, 22) du dispositif de réglage de train (15) par rapport à l'alimentation hydraulique (2).

2. Système d'actionnement de train d'atterrissage d'aéronef selon la revendication précédente, un dispositif de guidage de train d'atterrissage (19) étant conçu de façon électrohydraulique, un vérin de réglage (39, 40) du dispositif de guidage de train (19) pouvant être actionné par ladite pompe hydraulique (2), et le dispositif de commande (4) commandant l'actionnement du dispositif de guidage de train (19) par la commande du régime et du sens de marche du moteur d'entraînement de réglage (3) et/ou de la pompe hydraulique (2) entraînée par celui-ci.

3. Système d'actionnement de train d'atterrissage d'aéronef selon l'une quelconque des revendications précédentes, le moteur électrique du mécanisme de commande (3) étant prévu exclusivement pour l'actionnement du train d'atterrissage.

4. Système d'actionnement de train d'atterrissage d'aéronef selon l'une quelconque des revendications précédentes, le train avant et le train principal présentant des servomoteurs (3) électriques séparés et/ou des pompes hydrauliques (2) séparés.

5. Système d'actionnement de train d'atterrissage d'aéronef selon la revendication 2 ou l'une des revendications spécifiques à celui-ci, les dispositifs de réglage de trappe de porte, de train d'atterrissage et de guidage de train d'atterrissage pouvant être reliés par un agencement de vannes (55) à la même source d'alimentation hydraulique (2), l'agencement de vannes (55) étant conçu de telle sorte qu'à chaque fois toujours au maximum seulement un dispositif de réglage (15, 16, 19) peut être relié à la source d'alimentation hydraulique (2).

6. Système d'actionnement de train d'atterrissage d'aéronef selon la revendication précédente, l'agencement de vannes (55) étant constitué de vannes de commutation (12, 20) montées en série, qui ouvrent côté sortie toujours seulement un canal de sortie ou une paire de canaux de sortie comprenant la conduite aller et la conduite retour.

7. Système d'actionnement de train d'atterrissage d'aéronef selon l'une quelconque des revendications précédentes, la vanne de commutation (20), sur laquelle les conduites de raccordement (21, 22 ; 24, 25) du dispositif de réglage de train d'atterrissage (15) et du dispositif de réglage de trappe de porte (16) sont regroupés, présentant une troisième position dans laquelle les conduites de raccordement (21, 22 ; 24, 25) aussi bien du dispositif de réglage de train (15) que du dispositif de réglage de trappe de porte (16) sont séparés de la pompe hydraulique (2) et les conduites (13, 14) s'appliquant côté entrée de la pompe hydraulique (2) sont court-circuitées, de préférence guidées par un dispositif d'étranglement (43).

8. Système d'actionnement de train d'atterrissage d'aéronef selon l'une quelconque des revendications précédentes, la vanne de commutation (20) étant conçue comme une vanne à solénoïde 10/3.

9. Système d'actionnement de train d'atterrissage d'aéronef selon la revendication 2 ou l'une des autres revendications rapportées à la revendication 2, les conduites de raccordement (17, 18) du dispositif de guidage de train (19) et les conduites d'alimentation (13, 14) pour le dispositif de réglage de train (15) et le dispositif de réglage de trappe de porte (16) étant regroupés sur le côté sortie d'une vanne de commutation (12), qui peut être reliée côté entrée à la pompe hydraulique (2), relie dans une première position les conduites d'alimentation (13, 14) pour le dispositif de réglage de train (15) et le dispositif de réglage de trappe de porte (16) à la pompe hydraulique (2) et sépare dans le même temps les conduites de raccordement (17, 18) du dispositif de guidage de train (19) de la pompe hydraulique, et dans une seconde position sépare les conduites d'alimentation (13, 14) pour le dispositif de réglage de train (15) et le dispositif de réglage de trappe de porte (16) de la pompe hydraulique (2) et relie dans le même temps les conduites de raccordement (17, 18) du dispositif de guidage de train (19) à la pompe hydraulique (2).

10. Système d'actionnement de train d'atterrissage d'aéronef selon la revendication précédente, la première position étant la position de départ de la vanne de commutation (12).

11. Système d'actionnement de train d'atterrissage d'aéronef selon l'une des revendications précédentes, la vanne de commutation (12) étant conçue comme une vanne à solénoïde 8/2.

12. Système d'actionnement de train d'atterrissage d'aéronef selon l'une quelconque des revendications précédentes, le dispositif de réglage de train (15) et le dispositif de réglage de trappe de porte (16) pouvant être reliés directement l'un avec l'autre par une vanne de commutation (28), laquelle relie dans une position de départ les conduites de raccordement du dispositif de réglage de train (15) et le dispositif de réglage de trappe de porte (16) à des conduites d'alimentation électrique (21, 22 ; 24, 25) et dans une position d'urgence la conduite de sortie (45) du dispositif de réglage de train (15) et la conduite de sortie du dispositif de réglage de trappe de porte (16) à la conduite d'entrée (46) du dispositif de réglage de trappe de porte (16) et relie la conduite d'entrée (48) du dispositif de réglage de train (15) au réservoir du système (9).

13. Système d'actionnement de train d'atterrissage d'aéronef selon l'une quelconque des revendications précédentes, l'agencement de soupapes (55) du train avant présentant exactement trois vannes de commutation (12, 20, 28) pouvant être actionnées par de l'énergie extérieure et/ou l'agencement de vannes de chaque train principal présentant exactement deux vannes de commutation (20, 28) pouvant être actionnées par de l'énergie extérieure.
